# EUROPÄISCHE PATENTSCHRIFT

(11) **EP 1 694 521 B1**
(45) Veröffentlichungstag und Bekanntmachung des Hinweises auf die Patenterteilung: **10.11.2010**
(21) Anmeldenummer: 04816635.9
(22) Anmeldetag: 07.12.2004
(51) Int. Cl.: B60H 1/00

(54) **EINE LÜFTEREINHEIT FÜR EIN KRAFTFAHRZEUG**
VENTILATION UNIT FOR A MOTOR VEHICLE
UNITE DE VENTILATION POUR VEHICULES A MOTEUR

(30) Priorität: 08.12.2003 US 731529
(43) Veröffentlichungstag der Anmeldung: 30.08.2006
(73) Patentinhaber: Behr America, Inc, Troy, Michigan 48083 (US)
(72) Erfinder: RADEMACHER, Greg, Clarkston, MI 48348 (US); MASTERSON, Don, 1531 Auburn Hills, MI (US)
(74) Vertreter: Grauel, Andreas
(86) Internationale Anmeldenummer: PCT/IB2004/004423
(87) Internationale Veröffentlichungsnummer: WO 2005/053976

(56) Entgegenhaltungen:
- EP-A- 0 845 375
- DE-A1- 4 000 990
- US-A- 5 109 755

## Beschreibung

### GEBIET DER ERFINDUNG

Die vorliegende Erfindung betrifft eine Lüftereinheit für ein Kraftfahrzeug, und insbesondere eine Einheit bestehend aus einem Gehäuse mit Luftkanälen, über welche die Luft durch eine Öffnung im Armaturenbrett in den Innenraum des Fahrzeugs geleitet wird.

Konventionelle Ltiftereinheiten oder Klimaanlagen des vorliegenden Typs sind so konfiguriert, dass sie kalte oder temperierte Luft von außen mit erwärmter Luft, die in einem Heizungswärmetauscher erzeugt wird, mischen. Die Geschwindigkeit des Kaltluftstroms ist im allgemeinen höher als die der heißen Luft, was zumindest teilweise auf die Tatsache zurückzuführen ist, dass die heiße Luft durch einen Heizungswärmetauscher geströmt ist. Dies hat konsequenterweise zur Folge, dass die höhere Geschwindigkeit der kalten Luft zu einer Bildung von Schichten in dem Gesamtluftstrom führt, wenn die Kaltluftklappen für die Regelung des Kaltluftstroms geöffnet sind. In einigen Fällen kann ein großes Temperaturgefälle über die Auslassöffnungen der Lüftereinheit entstehen. Dieses kann von den Insassen des Kraftfahrzeugs wahrgenommen werden und ein Unbehagen hervorrufen. Bei der Entfrostung oder Beschlagfreihaltung kann dieses Temperaturgefälle über das Armaturenbrett eine ungleichmäßige Entfrostung zur Folge haben. In der DE 40 00 990 A1 ist als nächster Stand der Technik eine Klimaanlage mit einer Verteilkammer beschrieben, bei der eine den Ausblasöffnungen des Armaturenbrettes zugeordnete Anschlussöffnung in der Verteilkammer in Luftströmungsrichtung nach den anderen Anschlussöffnungen angeordnet ist. Um Frischluft der aufgeheizten Luft kontrollierter zuführen zu können, ist ferner ein Frischluftkanal vorgesehen, der zu einer Ausblasdüse führt, die im Bereich der den Ausblasöffnungen des Armaturenbrettes zugeordneten Anschlussöffnung liegt.

### ZUSAMMENFASSUNG DER ERFINDUNG

Eine Aufgabe der vorliegenden Erfindung ist es, eine Lüftereinheit zu schaffen, in welcher der Unterschied zwischen den Lufttemperaturen über die Auslassöffnungen des Armaturenbretts minimiert wird. In einer speziellen Ausführungsform der Erfindung beträgt das Temperaturgefälle über die Auslassöffnung des Armaturenbretts beispielsweise nicht mehr als etwa 3°C (5°F).

Gemäß der vorliegenden Erfindung wird eine Lüftereinheit für ein Kraftfahrzeug geschaffen, bestehend aus einem Gehäuse mit Luftkanälen, über welche die Luft durch Öffnungen im Armaturenbrett in den Innenraum des Fahrzeugs geleitet wird. In dem Gehäuse ist neben den besagten Öffnungen im Armaturenbrett mindestens ein Saugrohr angeordnet. Dieses mindestens eine Saugrohr verfügt über einen Auslassschlitz, der so angeordnet ist, dass er dem aus den Öffnungen im Armaturenbrett austretenden Luftstrom ausgesetzt ist. Der an dem Auslassschlitz vorbei strömende Luftstrom erzeugt ein Vakuum oder eine Luftströmung innerhalb des Saugrohrs, die es beispielsweise ermöglicht, dass warme oder heiße Luft in den Kaltluftstrom, der an der Außenseite des Saugrohrs vorbei strömt, hinein gezogen und mit ihm vermischt wird.

Diese Anordnung bietet den besonderen Vorteil, dass die gewünschte Vermischung der Luft passiv erzielt wird, ohne die Notwendigkeit einer Regelvorrichtung. Es sind keine zusätzlichen oder beweglichen Teile erforderlich, was reduzierte Wartungs- und Fertigungskosten zur Folge hat.

Gemäß der Erfindung ist dieses mindestens eine Saugrohr entlang einer verlängerten Seite der Öffnungen im Armaturenbrett angeordnet. Bei dieser Anordnung verläuft der Auslassschlitz des Saugrohrs in wesentlichen parallel zur Längsrichtung der Öffnungen im Armaturenbrett. Als ein Ergebnis daraus kann ein größerer Anteil des austretenden Luftstroms mit warmer Luft vermischt werden, die aus dem Saugrohr heraus gesaugt wird.

Gemäß der Erfindung werden zwei Saugrohre zur Verfügung gestellt, wobei jedes der Rohre entlang gegenüberliegender verlängerter Seiten der Öffnungen im Armaturenbrett angeordnet ist. Auch in dieser Anordnung verlaufen die Auslassschlitze parallel zur Längsrichtung der Öffnungen im Armaturenbrett, hier jedoch auf beiden Seiten der Öffnungen im Armaturenbrett.

In einer weiteren Ausführungsform wird ein erstes Ende des Saugrohrs als eine Luftansaugöffnung zur Verfügung gestellt, während der Auslassschlitz axial in einer Seitenwand des Saugrohrs gebildet wird. Der Auslassschlitz kann sich über mindestens die Hälfte der axialen Länge des Saugrohrs erstrecken.

In einer weiteren bevorzugten Ausführungsform weist der Auslassschlitz eine unterschiedliche Breite entlang der axialen Richtung des Saugrohrs auf. Auf diese Weise kann, abhängig von der axialen Position innerhalb des Kaltluftstroms, mehr oder weniger angesaugte Luft dem Kaltluftstrom hinzugefügt werden.

Weitere Aufgaben, Merkmale und Vorteile der Erfindung werden aus der nun folgenden detaillierten Beschreibung der bevorzugten Ausführungsformen ersichtlich, wenn die Betrachtung in Verbindung mit den beigefügten gezeichneten Abbildungen erfolgt.

### KURZE BESCHREIBUNG DER ZEICHNUNGEN

Im folgenden werden Beispiele für Ausführungsformen der Erfindung in Bezugnahme auf die Zeichnung beschrieben:
ABBILDUNG 1 zeigt eine konventionelle Lüftereinheit mit Darstellung der heißen und kalten Luftströme;
ABBILDUNG 2 zeigt einen Querschnitt einer Lüftereinheit gemäß einer Ausführungsform der vorliegenden Erfindung;
ABBILDUNG 3 zeigt eine Schnittdarstellung der Einheit aus ABBILDUNG 2 entlang der Schnittlinie 3-3; Die ABBILDUNGEN 4A und 4B zeigen perspektivische Ansichten der Ausführungsform aus den ABBILDUNGEN 2 und 3.

### DETAILLIERTE BESCHREIBUNG VON BEVORZUGTEN AUSFÜHRUNGSFORMEN

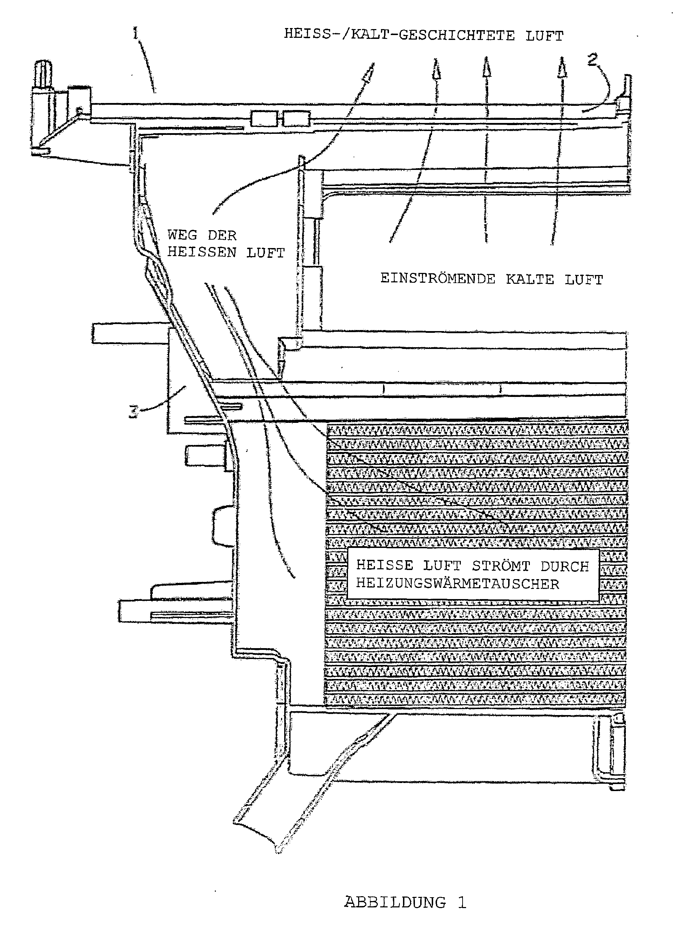

ABBILDUNG 1 zeigt eine konventionelle Lüftereinheit zur Verwendung für die Beheizung und/oder Kühlung des Innenraums eines Kraftfahrzeugs. Die Lüftereinheit 1 enthält ein Gehäuse 3, wo ein Gemisch aus heißer und kalter Luft aus der Öffnung in dem Armaturenbrett austritt. Wenn, wie oben diskutiert, die Vermischung der kalten und heißen Luftströme aufgrund der hohen Geschwindigkeit der kalten Luft unvollständig ist, so hat dies zur Folge, dass der aus den Öffnungen im Armaturenbrett 2 austretende Luftstrom Schichten aufweist. Eine stark geschichtete Luft, die aus der Einheit austritt, ist wahrnehmbar und kann von einem Insassen des Fahrzeugs gefühlt werden. Die vorliegende Erfindung nimmt sich dieses Problems an, wie im folgenden in Verbindung mit bevorzugten Ausführungsformen ausführlich beschrieben wird.

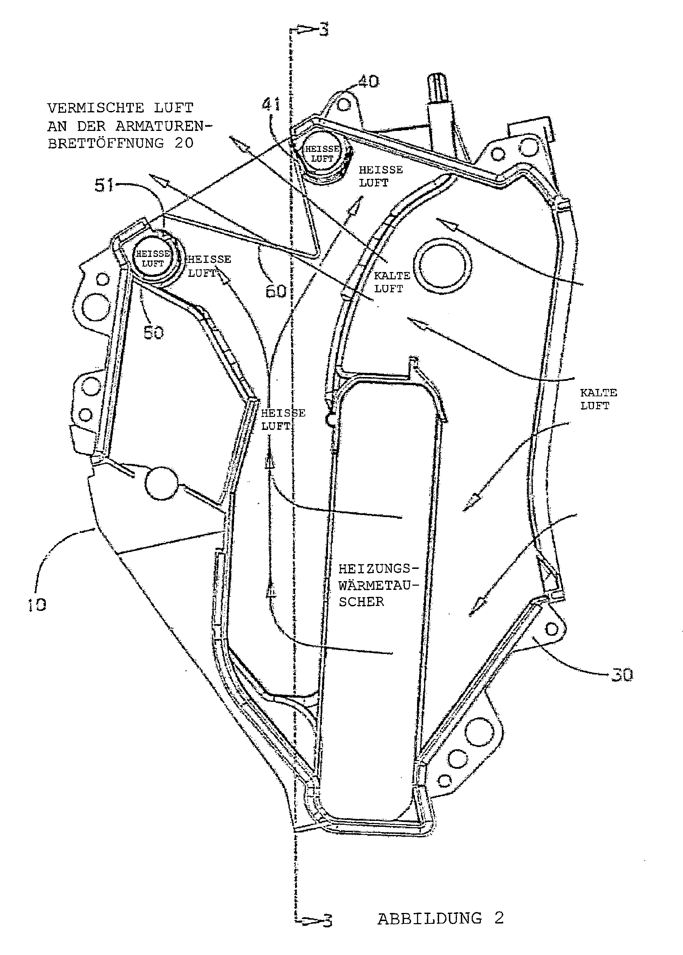

ABBILDUNG 2 zeigt eine bevorzugte Ausführungsform der vorliegenden Erfindung als Schnittdarstellung. Kalte Luft strömt durch Luftkanäle direkt durch die Einheit zu den Armaturenbrettöffnungen 20. Der Begriff "kalte" Luft ist relativ zu verstehen, nämlich als Luft, die beispielsweise nicht durch einen Heizungswärmetauscher strömt, als Umgebungsluft oder als Luft, die aus dem Innenraum des Fahrzeugs angesaugt wird. Ein anderer Luftfluss strömt, wiederum in Anlehnung an ABBILDUNG 2, durch den Heizungswärmetauscher, und solche Luft wird für die vorliegenden Zwecke als "heiße" Luft bezeichnet. Es ist zu verstehen, dass für Luft, die nicht durch einen Heizungswärmetauscher geströmt ist, der Begriff "heiß" nur relativ ist. Darüber hinaus werden Fachleute es zu schätzen wissen, dass die Erfindung sowohl zur Kühlung, als auch für das Erwärmen von Luft eingesetzt werden kann.

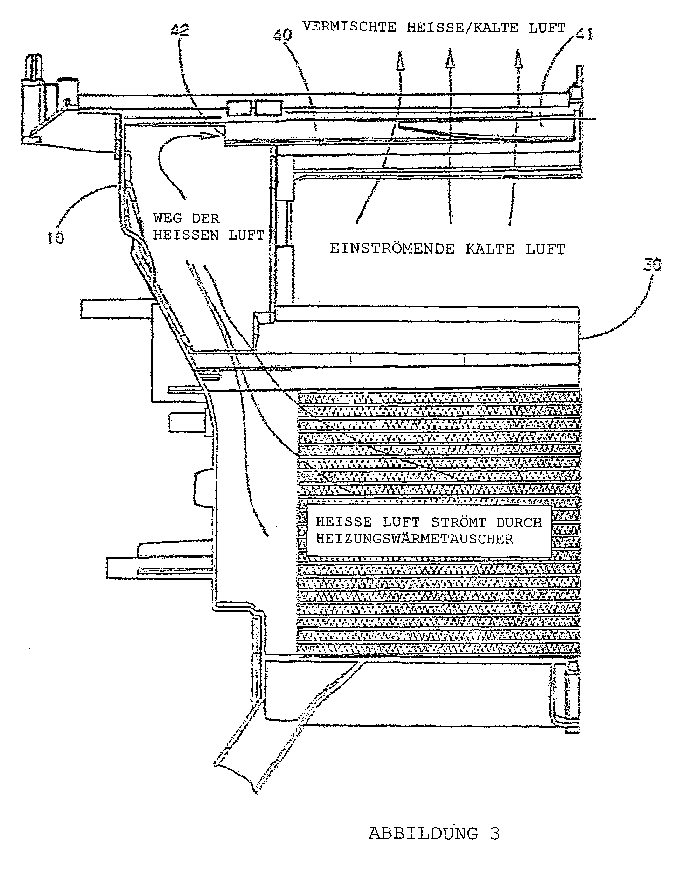

Das Gehäuse 30 enthält Luftkanäle, um die heißen und kalten Luftströme zu den Armaturenbrettöffnungen 20 zu leiten, aus welchen der resultierende Luftstrom in den Innenraum des Kraftfahrzeugs hinein strömt. Unter Bezugnahme auf die ABBILDUNGEN 2 und 3 werden die heißen und kalten Luftströme miteinander vermischt, bevor sie aus der Öffnung im Armaturenbrett austreten. Diese Vermischung der heißen und kalten Luftströme wird durch mindestens ein Saugrohr 40 intensiviert, das in dem Gehäuse 30 neben den Armaturenbrettöffnungen 20 angebracht ist. In der vorliegenden Ausführungsform befindet sich das Saugrohr 40 neben einer Vorderseite der Armaturenbrettöffnungen und beinhaltet einen Auslassschlitz 41.

Der Auslassschlitz 41 ist so angeordnet, das er dem aus den Armaturenbrettöffnungen austretenden Luftstrom ausgesetzt ist. In der Darstellung in ABBILDUNG 3 befindet sich der Auslassschlitz 41 rechts neben dem austretenden Luftstrom, wo die Luft kälter ist. Wenn Luft an dem Auslassschlitz 41 vorbei strömt, wird innerhalb des Saugrohrs 40 eine Luftströmung erzeugt, die heiße Luft aus einer Einlassöffnung ansaugt, die an einem ersten Ende 42 des Saugrohrs 40 zur Verfügung gestellt ist. Auf diese Weise wird der kältere Teil des austretenden Luftstroms mit der heißen Luft vermischt, die durch das Saugrohr 40 seitlich in den Luftstrom hinein gezogen wird (in ABBILDUNG 3 von der linken Seite).

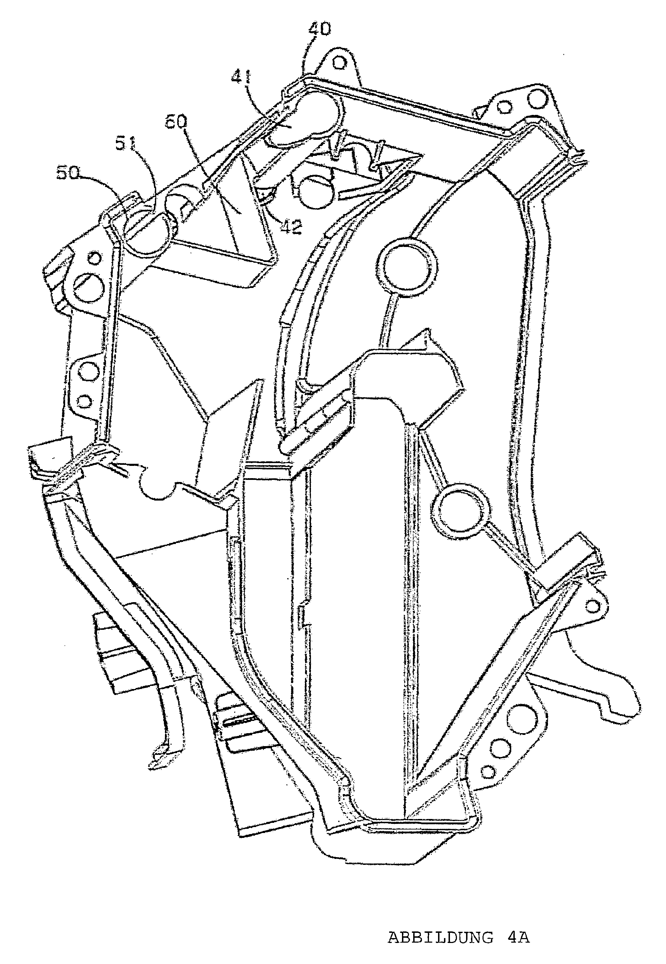

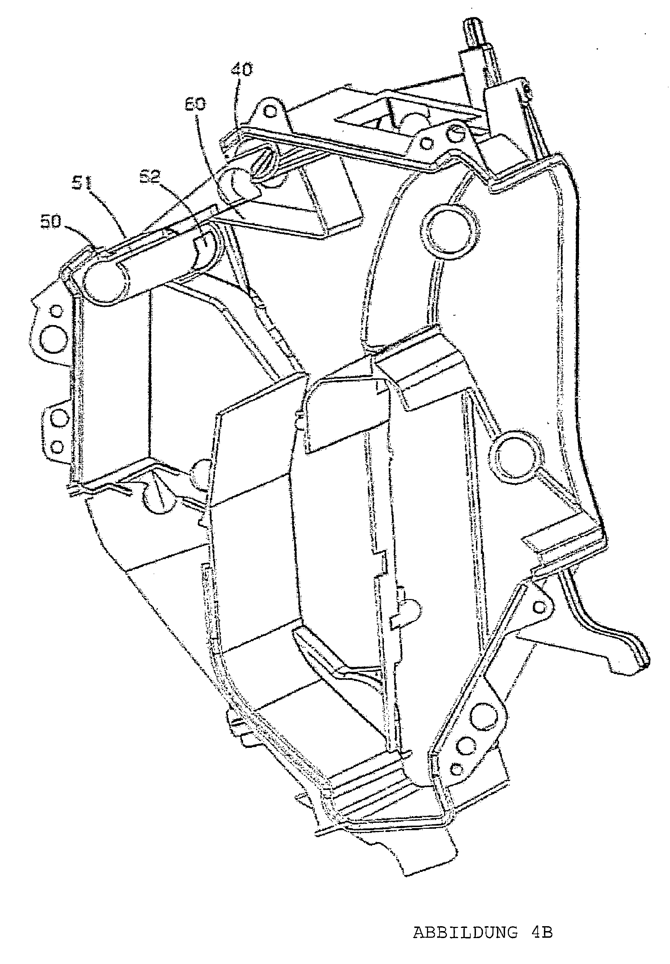

In den Ausführungsformen der ABBILDUNGEN 2 und 3 sind zwei Saugrohre (40, 50) entlang der verlängerten Seite der Armaturenbrettöffnungen 20 angeordnet. Ein Saugrohr auf einer Vorderseite, und eines auf einer Rückseite der Armaturenbrettöffnungen. Das zweite Saugrohr 50 beinhaltet außerdem einen Auslassschlitz 51, der so angeordnet ist, dass er dem Luftstrom ausgesetzt ist, wenn dieser aus den Auslassöffnungen 20 austritt. Das Vorbeiströmen des Luftstroms an dem Schlitz 51 erzeugt eine Luftströmung, durch die aufgewärmte Luft ansaugt wird. Wie das erste Saugrohr 40 weist auch das zweite Saugrohr 50 eine Einlassöffnung 52 an einem ersten Ende auf, die sich in dem heißen Luftstrom befindet. Die Anordnung der Rohre und ihrer Einlassenden geht auch aus den perspektivischen Ansichten der Lüftereinheit hervor, die in den ABBILDUNGEN 4A und 4B dargestellt sind.

Die Auslassschlitze 41 und 51 der Saugrohre 40 und 50 sind im wesentlichen axial in einer Seitenwand der jeweiligen Rohre gebildet. Die Schlitze 41 und 51 können sich über die gesamte axiale Länge des jeweiligen Rohrs, oder jede andere gewünschte axiale Länge erstrecken. In einer bevorzugten Ausführungsform erstrecken sich die Schlitze 41 und 51 über mindestens die Hälfte der axialen Länge des jeweiligen Rohrs 40, 50. Wie in ABBILDUNG 3 zu sehen ist, kann der Auslassschlitz 41 auch eine unterschiedliche Breite aufweisen, abhängig von der axialen Position entlang des Saugrohrs 40. Mittels dieses Merkmals kann die Menge der heißen Luft, die an eine bestimmte axiale Position in dem Luftstrom geliefert wird, eingestellt werden. Die Festlegung der Länge und Breite des Auslassschlitzes erfolgt gemäß der jeweiligen Anwendung oder gemäß der Anforderungen, die ein gegebenes Lüftungssystem erfüllen muss. Es ist zu verstehen, dass Größe und Form der Auslassschlitze, ebenso wie Größe und Form der Rohre, als Entwurfsparameter eingestellt werden können, um eine maximale Effizienz bei der Vermischung der heißen und kalten Luftströme sicherzustellen. Nach Dimensionierung der gesamten Lüftereinheit in Hinsicht auf die Rohre sind keine weiteren Einstellungen mehr erforderlich.

Weiterhin ist die Formung der Saugrohre der vorliegenden Erfindung ein integraler Bestandteil der Formung des Gehäuses der Einheit, so dass bei der Fertigung der vorliegenden Lüftereinheit keine zusätzlichen Montagearbeiten erforderlich sind.

Ein weiterer Vorteil der vorliegenden Erfindung ist ein passiver Selbstregelungseffekt, der aus der Verwendung der Saugrohre resultiert. Wenn die Kaltluftklappen für die Kaltluftkanäle geöffnet sind, ergibt sich eine maximale Strömungsgeschwindigkeit der kalten Luft, insbesondere an einer Seite des Luftstroms, in ABBILDUNG 3 beispielsweise auf der rechten Seite des Luftstroms. Die maximale Geschwindigkeit der kalten Luft, die an dem Auslassschlitz 41 des Saugrohrs 40 vorbei strömt, erzeugt eine maximale Luftströmung der heißen Luft und infolgedessen den gewünschten Mischeffekt. Wenn andererseits die Kaltluftklappen in Richtung der geschlossenen Position eingestellt werden, so sinkt die Geschwindigkeit der kalten Luft und damit auch die der Luftströmung, wobei jedoch auch der Bedarf an angesaugter heißer Luft geringer ist. Somit wird die Menge heißer Luft, die mit dem Kaltluftstrom vermischt werden muss, automatisch geregelt.

In einer weiteren Ausführungsform der vorliegenden Erfindung wird ein Leitblech 60 in dem Bereich der ersten Enden 42, 52 der Saugrohre 40, 50 zur Verfügung gestellt. Das Leitblech 60 weist eine geringfügige axiale Ausdehnung auf und ist so angeordnet, dass es heiße Luft, die ansonsten direkt in die Armaturenbrettöffnung 20 einströmen würde, ableitet und sie in die Einlassöffnungen 42 und 52 der Rohre 40 und 50 leitet. In der vorliegenden Ausführungsform ist das Leitblech V-förmig ausgeführt, jedoch kann dieses Leitblech auch andere Formen aufweisen. Das Leitblech hindert heiße Luft daran, direkt in die Armaturenbrettöffnung 20 einzuströmen, und nimmt darüber hinaus die Funktion eines Ablenkbleches wahr, das heiße Luft in den Bereich der Einlassöffnungen 42, 52 der Saugrohre leitet.

Obwohl bei der Beschreibung dieser Erfindung die Betonung auf bestimmten Ausführungsformen lag, sollte verstanden werden, dass die vorangegangene Beschreibung auf diejenigen Verfahren für die praktische Umsetzung der Erfindung beschränkt wurde, die derzeit für die besten gehalten werden. Es wird sich erweisen, dass verschiedene Modifikationen an der Erfindung vorgenommen und einige oder alle Vorteile der Erfindung erzielt werden können. Auch ist die Erfindung nicht so konzipiert, dass sie jedes einzelne der oben beschriebenen Merkmale und Aspekte, oder Kombinationen derselben, erfordert. In vielen Fällen sind bestimmte Merkmale und Aspekte für die praktische Ausführung anderer Merkmale und Aspekte nicht von wesentlicher Bedeutung. Die Erfindung sollte nur durch die beigefügten Ansprüche und Entsprechungen derselben beschränkt werden, da die Ansprüche auch andere Ausführungsformen und Modifikationen abdecken sollen.

## Patentansprüche

1. Armaturenbrett mit einer Heizungs- oder Klimaanlage mit einer Lüftereinheit, wobei die Anlage einen Heizkörper, einen Verdampfer und Luftstromsteuerelemente aufweist, wobei innerhalb des Gehäuses der Anlage Warmluftkanäle ausgebildet sind und Luft, die durch die Warmluftkanäle strömt, von dem Heizkörper erwärmbar ist, wobei innerhalb des Gehäuses der Anlage Kaltluftkanäle ausgebildet sind und Luft, die durch die Kattluftkanäle strömt, von dem Verdampfer abkühlbar ist, und Luftstromsteuerelemente vorhanden sind, um die Mischung der Warmluft mit der Kaltluft zu ermöglichten, wobei die Lüftereinheit aus einem Gehäuse (30) mit Luftkanälen besteht, über welche Luft durch Öffnungen (20) im Armaturenbrett in den Innenraum des Fahrzeugs geleitet wird, und mit mindestens einem Saugrohr (40), angeordnet in dem Gehäuse (30) neben den besagten Öffnungen (20) im Armaturenbrett, wobei dieses besagte mindestens eine Saugrohr (40) einen Auslassschlitz (41) beinhaltet, der so angeordnet ist, dass er dem aus den besagten Öffnungen (20) im Armaturenbrett austretenden Luftstrom ausgesetzt ist, **dadurch gekennzeichnet, dass**
das besagte mindestens eine Saugrohr (40) entlang einer verlängerten Seite der Öffnungen (20) im Armaturenbrett angeordnet ist und weiterhin mindestens ein zusätzliches Saugrohr (50) beinhaltet, das neben einer zweiten verlängerten Seite der besagten Öffnungen (20) im Armaturenbrett angeordnet ist, wobei das besagte mindestens eine zusätzliche Saugrohr (50) einen Auslassschlitz (51) aufweist, der so angeordnet ist, dass er dem aus der besagten Öffnung (20) im Armaturenbrett austretenden Luftstrom ausgesetzt ist.

2. Armaturenbrett gemäß Anspruch 1, worin ein erstes Ende (42) des mindestens einen Saugrohrs (40) eine Lufteinlassöffnung aufweist.

3. Armaturenbrett gemäß Anspruch 1, worin der besagte Auslassschlitz (41) axial in einer Seitenwand des mindestens einen Saugrohrs (40) gebildet wird.

4. Armaturenbrett gemäß Anspruch 3, worin sich der besagte Auslassschlitz (41) über mindestens die Hälfte der axialen Länge des mindestens einen Saugrohrs (40) erstreckt.

5. Armaturenbrett gemäß Anspruch 3, wobei der Auslassschlitz (41) eine unterschiedliche Breite entlang der axialen Richtung des mindestens einen Saugrohrs (40) aufweist.

6. Armaturenbrett gemäß einem der vorhergehenden Ansprüche, die weiterhin ein Leitblech (60) neben dem ersten Ende des Saugrohrs (40) zur Ableitung von Luft in Richtung der Einlassöffnung an dem besagten ersten Ende beinhaltet.

7. Armaturenbrett gemäß Anspruch 6 worin das mindestens eine Saugrohr(40), das erste Einlassende (42) und der Auslassschlitz (41) zusammen mit dem Leitblech (60) für eine passive selbstregelnde Temperaturschichtungskontrolle ausgebildet sind.

8. Armaturenbrett gemäß einem der vorhergehenden Ansprüche, bestehend weiterhin aus: mindestens zwei Saugrohren (40, 50), die als integraler Bestandteil in dem Gehäuse geformt sind und neben mindestens zwei Seiten angeordnet sind, die durch die Öffnungen (20) im Armaturenbrett definiert werden, wobei jedes dieser besagten mindestens zwei Saugrohre einen Auslassschlitz (41, 51) beinhaltet, der so angeordnet ist, dass er dem aus den besagten Öffnungen (20) im Armaturenbrett austretenden Luftstrom ausgesetzt ist.

9. Armaturenbrett gemäß einem der vorhergehenden Ansprüche, bestehend weiterhin aus: einem Lufteinlass, der zur Aufnahme von Luft in der Lage ist; mindestens zwei Luftkanälen, die mindestens zwei separate Luftkanäle definieren; einem Luftmischbereich, in dem Luft, die durch die mindestens zwei separaten Luftkanäle strömt, zusammenströmt; einem in Längsrichtung geschlitzten Rohr (40), positioniert innerhalb des Luftmischbereichs, worin ein Ende (42) des geschlitzten Rohrs (40) eine Öffnung beinhaltet, die in der Lage ist, Luft von nur einem der mindestens zwei separaten Luftkanäle aufzunehmen; und einem Luftauslass, der in der Lage ist, Luft abzugeben, die durch den besagten Lufunischbereich strömt.

## Claims

1. A dashboard having a heating or air conditioning system comprising a fan unit, wherein the system includes a heater core, an evaporator, and air-flow control elements, wherein warm air ducts are formed inside the housing of the system, and air that flows through the warm air ducts can be warmed by the heater core, wherein cold air ducts are formed inside the housing of the system, and air that flows through the cold air ducts can be cooled by the evaporator, and air-flow control elements are provided to enable the warm air to be mixed with the cold air, wherein the fan unit is composed of a housing (30) having air ducts, via which air is directed through openings (20) in the dashboard into the interior space of the vehicle, and having at least one aspiration pipe (40) disposed in the housing (30) next to the aforementioned openings (20) in the dashboard, wherein this aforementioned at least one aspiration pipe (40) includes an outlet slot (41) that is disposed such that it is exposed to the air stream that flows out of the aforementioned openings (20) in the dashboard, **characterized in that** the aforementioned at least one aspiration pipe (40) is disposed along an extended side of the openings (20) in the dashboard, and furthermore includes at least one additional aspiration pipe (50) that is disposed next to a second extended side of the aforementioned openings (20) in the dashboard, wherein the aforementioned at least one additional aspiration pipe (50) includes an outlet slot (51) that is disposed such that it is exposed to the air stream flowing out of the aforementioned opening (20) in the dashboard.

2. The dashboard according to claim 1, wherein a first end (42) of the at least one aspiration pipe (40) includes an air inlet opening.

3. The dashboard according to claim 1, wherein the aforementioned outlet slot (41) is formed axially in a side wall of the at least one aspiration pipe (40).

4. The dashboard according to claim 3, wherein the aforementioned outlet slot (41) extends across at least half the axial length of the at least one aspiration pipe (40).

5. The dashboard according to claim 3, wherein the outlet slot (41) has a different width along the axial direction of the at least one aspiration pipe (40).

6. The dashboard according to one of the preceding claims, which furthermore includes a guide plate (60) next to the first end of the aspiration pipe (40) for diverting air in the direction of the inlet opening at the aforementioned first end.

7. The dashboard according to claim 6, wherein the at least one aspiration pipe (40), the first inlet end (42), and the outlet slot (41), together with the guide plate (60), are designed for passive, self-regulating temperature stratification control.

8. The dashboard according to one of the preceding claims, furthermore comprising: at least two aspiration pipes (40, 50) which are formed as an integral component in the housing, and are disposed next to at least two sides that are defined by the openings (20) in the dashboard, wherein each of these aforementioned at least two aspiration pipes includes an outlet slot (41, 51) that is disposed such that it is exposed to the air stream flowing out of the aforementioned openings (20) in the dashboard.

9. The dashboard according to one of the preceding claims, furthermore comprising: an air outlet that is capable of receiving air; at least two air ducts that define at least two separate air ducts; an air mixing region, in which air that flows through the at least two separate air ducts flows together; a pipe (40) that is slotted in the longitudinal direction, positioned within the air mixing region, wherein one end (42) of the slotted pipe (40) includes an opening that is capable of receiving air from only one of the at least two separate air ducts; and an air outlet that is capable of releasing air that flows through the aforementioned air mixing region.

## Revendications

1. Tableau de bord comprenant un système de chauffage et / ou de climatisation comportant un ensemble formant ventilateur, où le système comporte un radiateur, un évaporateur et des éléments de commande de flux d'air, où des conduits d'air chaud sont configurés à l'intérieur du carter du système, et de l'air, qui circule à travers les conduits d'air chaud, peut être réchauffé par le radiateur, où des conduits d'air froid sont configurés à l'intérieur du carter du système, et de l'air, qui circule à travers les conduits d'air froid, peut être refroidi par l'évaporateur, et des éléments de commande de flux d'air sont prévus pour permettre le mélange de l'air chaud avec l'air froid, où l'ensemble formant ventilateur se compose d'un carter (30) comportant des conduits d'air par lesquels de l'air est dirigé dans l'habitacle du véhicule, à travers des ouvertures (20) prévues dans le tableau de bord, et comportant au moins une tubulure d'aspiration (40) disposée dans le carter (30) à proximité desdites ouvertures (20) prévues dans le tableau de bord, où cette dite tubulure d'aspiration (40) au moins au nombre de un comporte une fente de sortie (41) qui est disposée de manière telle, qu'elle soit exposée au flux d'air sortant desdites ouvertures (20) prévues dans le tableau de bord, **caractérisé en ce que** ladite tubulure d'aspiration (40) au moins au nombre de un est disposée le long d'un côté prolongé des ouvertures (20) prévues dans le tableau de bord et comporte en outre au moins une tubulure d'aspiration supplémentaire (50) qui est disposée à proximité d'un deuxième côté prolongé desdites ouvertures (20) prévues dans le tableau de bord, où ladite tubulure d'aspiration supplémentaire (50) au moins au nombre de un présente une fente de sortie (51) qui est disposée de manière telle, qu'elle soit exposée au flux d'air sortant de ladite ouverture (20) prévue dans le tableau de bord.

2. Tableau de bord selon la revendication 1, dans lequel une première extrémité (42) de la tubulure d'aspiration (40) au moins au nombre de un présente une ouverture d'entrée d'air.

3. Tableau de bord selon la revendication 1, dans lequel ladite fente de sortie (41) est formée, axialement, dans une paroi latérale de la tubulure d'aspiration (40) au moins au nombre de un.

4. Tableau de bord selon la revendication 3, dans lequel ladite fente de sortie (41) s'étend sur au moins la moitié de la longueur axiale de la tubulure d'aspiration (40) au moins au nombre de un.

5. Tableau de bord selon la revendication 3, où la fente de sortie (41) présente une largeur différente le long de la direction axiale de la tubulure d'aspiration (40) au moins au nombre de un.

6. Tableau de bord selon l'une quelconque des revendications précédentes, qui comprend en outre une tôle déflectrice (60) placée à proximité de la première extrémité de la tubulure d'aspiration (40) et servant à l'évacuation d'air en direction de l'ouverture d'entrée au niveau de ladite première extrémité.

7. Tableau de bord selon la revendication 6, dans lequel la tubulure d'aspiration (40) au moins au nombre de un, la première extrémité d'entrée (42) et la fente de sortie (41), en association avec la tôle déflectrice (60), sont configurées pour un contrôle de répartition de température passif qui s'autorégule.

8. Tableau de bord selon l'une quelconque des revendications précédentes, se composant en outre : d'au moins deux tubulures d'aspiration (40, 50) qui sont formées dans le carter comme un composant intégral et sont disposées à proximité d'au moins deux côtés qui sont définis par les ouvertures (20) prévues dans le tableau de bord, où chacune de ces dites tubulures d'aspiration au moins au nombre de deux comprend une fente de sortie (41, 51) qui est disposée de manière telle, qu'elle soit exposée au flux d'air sortant desdites ouvertures (20) prévues dans le tableau de bord.

9. Tableau de bord selon l'une quelconque des revendications précédentes, se composant en outre : d'une entrée d'air qui est prévue pour recevoir de l'air ; d'au moins deux conduits d'air qui définissent au moins deux conduits d'air distincts ; d'au moins une zone de mélange d'air dans laquelle afflue de l'air qui s'écoule par les conduits d'air distincts au moins au nombre de deux ; d'une tubulure (40) fendue dans le sens de la longueur et positionnée à l'intérieur de la zone de mélange d'air dans laquelle une extrémité (42) de la tubulure fendue (40) comprend une ouverture qui est prévue pour recevoir de l'air provenant seulement de l'un des conduits d'air distincts au moins de nombre de deux ; et d'une sortie d'air qui est prévue pour fournir de l'air qui circule à travers ladite zone de mélange d'air.
